# EUROPEAN PATENT SPECIFICATION

(11) **EP 2 759 195 B1**
(45) Date of publication and mention of the grant of the patent: **11.01.2017**
(21) Application number: 14152799.4
(22) Date of filing: 28.01.2014
(51) Int. Cl.: A01F 15/08, A01F 15/10, B30B 9/30

(54) **Agricultural baler provided with a bale ejecting system**
Landwirtschaftliche Ballenpresse mit einem Ballenauswurfsystem
Ramasseuse-presse agricole équipée d'un système d'éjection de balle

(30) Priority: 28.01.2013 BE 201300054
(43) Date of publication of application: 30.07.2014
(73) Proprietor: CNH Industrial Belgium nv, 8210 Zedelgem (BE)
(72) Inventor: De Baere, Freek, 9990 Maldegem (BE)
(74) Representative: CNH Industrial IP Department

(56) References cited:
- FR-A1- 2 700 099
- US-A- 4 791 865
- US-A- 5 540 144
- US-A1- 2002 108 508

## Description

### Field of the Invention

The present invention is related to agricultural balers, used for picking up crop material such as hay or straw from the field or receiving crop material from a harvester, and forming it into rectangular bales. The invention is in particular related to systems for ejecting bales from the baling chamber at the end of a harvesting run.

### State of the art.

Agricultural square or rectangular balers gather crop material into a baling chamber where the material is compressed by a reciprocating plunger to form rectangular bales. When a predetermined amount of crops have been gathered in the baling chamber and compressed by the plunger, a tying mechanism is activated to form a separately tied bale, which is subsequently pushed forward by the continued plunger action. The predetermined amount is monitored by a bale-length control system, often involving a star-wheel or the like, that measures the advance of the mass of compressed crops through the baling chamber.

Present-day harvesters are also equipped with a bale-eject system. This is a mechanism used to evacuate the bales from the baling chamber at the end of a harvesting run. As no more fresh crop material is being formed, the bales are no longer pushed forward by freshly compressed crop material, so they need to be advanced in another way. To this aim, the bale-eject system is manually activated. It may comprise a shuttle assembly as disclosed for example in US-A-4,791 ,865 -which discloses all the features of the preamble of claims 1 and 10-, WO-A-9629195 and EP-A-2108246, provided with pivotable tines which engage with the bales to push these bales towards the outlet of the baling chamber when the shuttle is pushed forward, and which slide past the bales when the shuttle is moved backwards. The shuttle assembly is driven by a hydraulic actuator mounted underneath the baling chamber.

Under particular conditions in terms of the crop type and/or weather conditions, the last bales in the chamber may be too heavy and the bale-eject tines are incapable of setting these bales in motion. As the plunger is no longer active in the baling chamber given that no fresh crops are being fed, the bales may only be evacuated at the start of a next harvesting run, or by manually operating the plunger. This represents a loss of time and comfort for the operator, as well as a less than optimal harvesting routine.

### Summary of the invention

The invention is related to a baler and to a method for operating a baler as described in the appended claims. The present invention is thus related to an agricultural baler for producing rectangular bales, provided with a baling chamber and reciprocating plunger, configured to move back and forth in the baling chamber, thereby compressing crop material and forming rectangular bales. The baler is further equipped with a stuffing mechanism for stuffing pre-compressed crops from a pre-compression chamber into the baling chamber, the stuffing action of said mechanism being synchronized with the plunger action, in that each stuffing action actuates at least one plunger cycle. The baler further comprises a bale length control system for producing bales of substantially equal length, and a bale-eject system for evacuating the last bales from the chamber at the end of a harvesting run. The baler of the invention is further equipped with a means for activating said stuffing mechanism automatically when the bale eject system is set in motion, thereby actuating at least one cycle of the plunger action. In other words, the activation of the stuffing mechanism is a direct consequence of the activation of the bale eject system, through an automatic coupling of the two mechanisms. This coupling can take place by a mechanical connection comprising a cable between a sensor plate of the stuffing mechanism and a movable portion of the bale eject system. The coupling may also take place by a combination of a movement detection sensor mounted so as to detect movement of said movable portion, said sensor generating a signal which is sent to an actuator that activates the stuffing mechanism, and thereby actuates at least one cycle of the plunger action. Said cycle gives a first impulse to the bales in the chamber after which the further transport of the bales out of the chamber is done by the normal operation of the bale eject system. In this way, the evacuation of the bales from the chamber is initiated by one or a few plunger action cycles, facilitating the further transport of the bales by the bale eject system. The invention is equally related to a method for operating a baler involving a step of automatically triggering a stuffing action when the bale eject system is set in motion.

### Brief description of the figures

Figure 1 shows a side view of an actual baler according to the invention, provided with a cable connection between the bale eject system and the sensor plate of the stuffing mechanism.
Figure 2 illustrates the bale-eject system in more detail.
Figure 3 shows a possible sensor location for a sensor configured to detect the activation of the bale eject system in a baler according to the invention.
Figure 4 shows an alternative pre-compression mechanism that can be used in a baler according to the invention.

### Detailed description of preferred embodiments of the invention

Preferred embodiments will now be described with reference to the drawings. The detailed description is not limiting the scope of the invention, which is defined only by the appended claims. In the context of this description, a 'harvesting run' is defined as a harvesting operation, wherein the baler is driven along a track, thereby continuously receiving crops in the baling chamber. A harvesting run may for example end when the baler reaches the end of a straight line. After the baler has been turned and put in position for harvesting a second track parallel to the first, a second harvesting run begins. A 'stuffing action' is defined as the action capable of transporting the contents of the pre-compression chamber into the baling chamber. A 'cycle of the plunger action' is defined as one reciprocating movement of the plunger, starting from a retracted position at the maximum distance from the baling chamber's outlet port, extending in the direction of the baling chamber's outlet port, and returning to the retracted position.

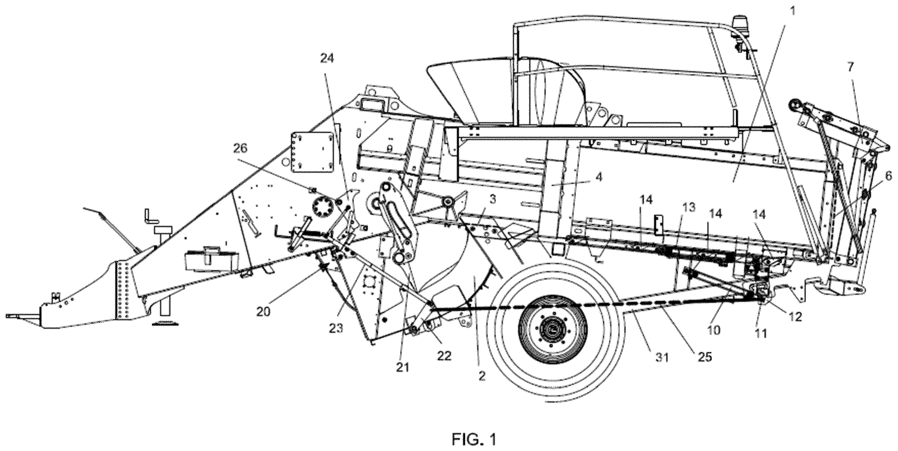

Figure 1 shows a side view of a baler according to an embodiment of the invention. Crop material is fed from a pre-compression chamber 2 that itself receives crops that are harvested from the ground through a suitable supply means (not shown). The material is fed into the baling chamber through an inlet section (approximately indicated by dotted line 3). Inside the chamber, a plunger 4 is arranged to move reciprocally between the above-defined retracted and extended positions in the longitudinal direction of the chamber. The movement of the plunger from left to right is coordinated with the feeding of pre-compressed material into the chamber through inlet section 3, so that each volume of pre-compressed material is pushed into the chamber and added to a mass of compressed crops that is being formed inside the chamber and progressively pushed towards the baling chamber's outlet port 6. The walls of the baling chamber are slightly converging and usually also equipped with actuators (not shown) to exert an external pressure on the walls, so as to compress the crops as they progress towards the outlet port 6. After the outlet port 6 of the baling chamber, a bale chute 7 is mounted, shown in figure 1 in retracted, inoperable position. When extended behind the baling chamber, the bale chute receives bales from the chamber and lowers the bales to the ground. The baler is equipped with a bale-length control system (not shown), usually comprising a star wheel or the like. The rotation of this wheel is driven by the forward motion of the crop material inside the baling chamber ('forward' meaning : in the direction of the outlet port 6). The star wheel is typically equipped with one or more encoders on its axis, to detect and measure the wheel's rotation. When a pre-defined number of rotations has been detected, a tying mechanism (not shown) is activated which ties together a pre-defined length of compressed crops to form separate bales. At the end of a harvesting run, a number of bales remain in the chamber and need to be removed by activating the bale eject system. The bale length control system and the tying mechanism can be of any type known in the art and are not described here in detail.

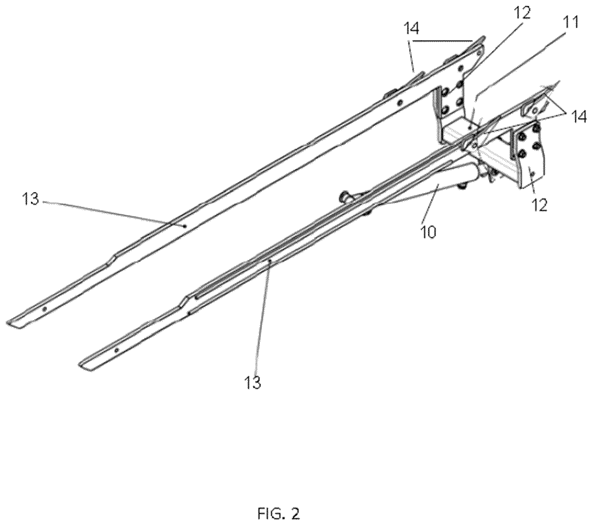

The bale eject system is also visible in Figure 1. Figure 2 shows a 3D view of a bale eject system, giving a clearer view of some of the components. These systems as such are equally known in the art. The system comprises a hydraulic actuator 10 mounted underneath the baling chamber and arranged to actuate the movement of a cross bar 11 mounted between vertical side plates 12. Mutually parallel bars 13 are fixed to the side plates 12. The bars 13 are parallel to the movement direction of the bales, with rotatable tines 14 attached to the bars, the tines having pointed ends directed towards the outlet port 6 of the baling chamber. Tines can be present along the entire length of the bars 13 (as in figures 1) or only on a portion of the bars 13 (as in figure 2). The bars 13 are guided in longitudinal rails (not shown) in the bottom of the baling chamber, preferably running in grooves on the floor of the baling chamber. When the cross bar 11 is pushed forward by the actuator 10, the tines 14 are pushed upwards so as to grip the bales and move them towards the outlet port 6 of the conveyor. When the cross bar 11 is pulled backwards by the actuator, the tines 14 glide past the bales in the baling chamber. In this way, reciprocal movement of the actuator 10 causes the remaining bales to be moved towards the outlet port 6. The bale eject system is typically operable through manually controlled handles (not shown).

The baler is provided with a stuffer mechanism 20 for loading crops from the pre-compression chamber 2 into the baling chamber 1. The stuffer mechanism is equipped with stuffer forks 21, arranged to sweep the contents of the pre-compression chamber into the baling chamber as soon as the pre-compression chamber is filled. The point at which the stuffing action is actuated is determined by a pivotable sensor plate 22 that is pushed down by the pressure exerted by the pre-compressed crops as the pre-compression chamber gets filled. When the sensor plate is pushed down over a predetermined angle, the trip latch 23 rotates the stuffer trip triangle plate 24 about its rotational axis 26 which in turn actuates the sweeping motion of the stuffer forks. Synchronised with this stuffing motion, the plunger 4 performs a cycle of its reciprocating movement, timed so as to push the freshly entered crops into the baling chamber. This stuffer mechanism as such is known in the art.

In the baler according to the embodiment of Figure 1, a cable 25 is connected between the cross bar 11 of the bale eject system and the sensor plate 22 of the stuffer mechanism. At the end of a harvesting run, the baling chamber is filled with bales that need to be evacuated by the bale eject system, but which may be too heavy to be set in motion by this system alone. When the bale eject system is set in motion, it pulls down the sensor plate, thereby activating the stuffer forks, even though no or not enough crops are present in the pre-compression chamber 2. The stuffing action however generates the synchronized action of the plunger 4. The impulse given by the forward motion of the plunger initiates the movement of the bales in the baling chamber towards the outlet, after which said movement is further maintained by the bale eject system. Even when no crops are present in the pre-compression chamber, the additional plunger action is capable of giving said impulse to the bales, because the crop material that was previously compressed by the plunger in the baling chamber will always expand to a certain degree when the plunger is retracted. For this reason, the plunger does come into contact with crop material during the additional plunger action, which is therefore sufficient to initiate movement of the bales towards the outlet port 6.

Even though the cable 25 is drawn as a continuous line, it is clear that the cable must have a given elasticity or be provided with a deformable portion, such as an elastic spring portion, to take into account the difference between the distance travelled by the two attachment points of the cable. The attachment point connected to the sensor plate 22 will normally move over a smaller distance than the cross bar 11 of the bale eject system, so the elastic portion must be configured so that the sensor plate 22 follows the cross bar 11 directly or soon after the latter is set in motion, and so that the cross bar may continue to move forward when the sensor plate is fully tilted in its actuating position (i.e. the position into which it is normally brought by the crops in the pre-compression chamber). The cable 25 will generate a plunger action not only during the first movement of the bale eject system, but also when the actuator 10 of said system is extended a second time. This second plunger action is no longer instrumental for moving the bales in the chamber. However, since the bales are normally evacuated by a limited number of actuator cycles (of actuator 10), for example 4 or 5 cycles, this does not pose a problem in terms of excess use or wear of the plunger as such.

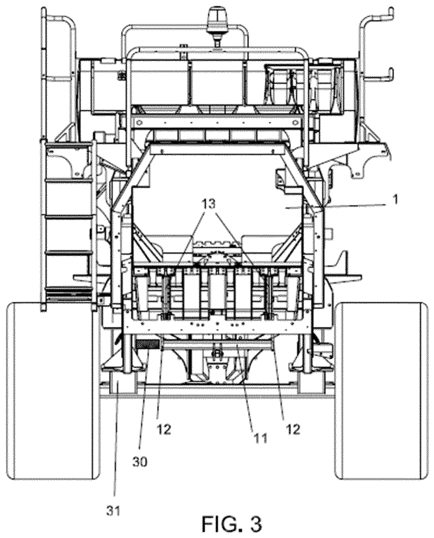

Instead of a cable connection, the means for activating the plunger 4 automatically when the bale eject system is set in motion may comprise one or more movement detection sensors arranged to detect the activation of the bale eject system, combined with a locally placed actuator configured to pull or push down the sensor plate 22 of the pre-compression chamber, as soon as the movement detection sensor detects a movement of a movable part of the bale eject system with respect to the baler's chassis. Alternatively, an actuator may be placed to rotate the stuffer trip triangle 24 upon receiving a signal from the bale eject system movement detector. Rotation of said stuffer trip triangle 24 equally triggers the stuffing forks and hence the plunger action. Figure 3 shows a rear view of the rectangular baler of figure 1, illustrating a possible mounting location of a bale eject system movement detection sensor 30. The bale eject system is visible, including the rotatable tines 14 mounted on bars 13, the actuator 10 , cross bar 11 and side plates 12. The bars 13 can be seen to be arranged in grooves in the floor of the baling chamber. The sensor 30 is shown, mounted on one of the beams 31 of the baler's chassis, with respect to which the bale eject system is movably arranged. The sensor 30 is directed at one of the side plates 12, so as to detect movement of said side plate when the bale eject system is activated. This is only an example of a possible mounting location of the sensor 30. According to another embodiment, a sensor can be placed to detect movement of the command handles (not shown) for operating the bale eject system. Other suitable locations for the movement detection sensor 30 are within the scope of the invention, as long as they allow the sensor to detect the bale ejection system's activation.

The movement detection sensor 30 can be any suitable type of sensor that can be used to detect motion of (e.g. metal) surfaces at which the sensor is directed. A suitable sensor is a 'Namur-standard' sensor, known as such in the art. The location of the sensor with respect to the side plates 12 is preferably as close as possible to the back of the side plates 12 (i.e. the vertical edge of the side plates that is furthest away from the hydraulic actuator), because the cylinder of the hydraulic actuator 10 may extract a little when baling, as a consequence of possible leaks in the hydraulic system.

The locally placed actuator for pulling or pushing down the sensor plate 22 is not shown in detail, as its construction is within the capabilities of the skilled person. Any known type of electrical actuator may be used, capable of rotating the sensor plate 22 or the stuffer trip triangle 24 about their respective rotational axes. In the embodiment wherein a local actuator is used, this actuator is preferably programmed so as to trigger the stuffer mechanism and hence the plunger action only upon detection of the first movement of the bale eject system (and thus not at every cycle of the bale eject actuator 10).

The scope of the invention is not limited to the stuffer mechanism comprising stuffer forks 21 and a pivotable sensor plate 22. The pivotable sensor plate 22, actuated by the cable 25 or by a locally placed actuator combined with a bale eject system movement detector 30, may be used in combination with any other stuffing mechanism known in the art. According to another embodiment, a bale eject movement detection sensor is used in combination with a stuffing mechanism that does not comprise a pivotable sensor plate 22. Such a stuffing mechanism may comprise a pair of rotatable belts forming the upper and lower wall of the pre-compression chamber, with an accelerated stuffing movement of the belts propelling the crops into the baling chamber. As with the stuffer fork mechanism, the accelerated stuffer movement of the belts is synchronized with the movement of the plunger 4. In this way, the activation of the stuffer belts at the end of a harvesting run, triggered by the movement of the bale eject system as detected by the movement detection sensor 30, activates at least one cycle of the plunger thereby initiating movement of the bales that are present in the baling chamber at the end of the harvesting run.

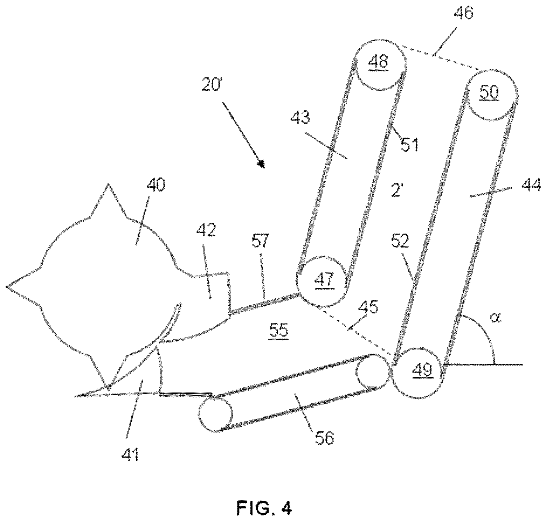

Figure 4 shows a pre-compression mechanism 20' in a baler according to the embodiment referred to in the preceding paragraph. The rotor 40 equipped with the knives 41 and the scraper 42 are components known as such in the art for gathering and cutting crops and feeding them to the pre-compression chamber 2'. The pre-compression chamber 2' is defined by two conveyor belts 43 and 44, extending between the pre-compression chamber's inlet and outlet sections 45 and 46. Each of the conveyor belts is mounted between pairs of rolls 47/48 and 49/50 respectively. The upper and lower walls 51 and 52 of the pre-compression chamber are thus formed by straight and mutually parallel portions of said belts moving past the pre-compression chamber's interior space 2'. Said upper and lower walls 51/52 are oriented at a slanted angle α with respect to the horizontal direction. The width of the conveyor belts (as measured in the direction perpendicular to the drawing in Figure 4), is preferably constant. The remaining sidewalls of the pre-compression chamber 2' are formed by plates which are preferably parallel to the plane of the drawing.

Upstream of the belts 43/44, and downstream of the feeder rotor 40, a buffer chamber 55 is present, separated from the pre-compression chamber by said inlet section 45. The floor of said chamber is formed by a conveyor belt 56, the ceiling of the buffer chamber is formed by a plate 57, while the remaining side walls of the buffer chamber are formed by plates that are preferably parallel to the plane of the drawing, i.e. the buffer chamber has a substantially constant width in the direction of movement of the crops. The buffer chamber is configured to receive crops directly from the feeder rotor 40, and is further configured to deliver crops to the inlet section 45 of the pre-compression chamber 2'. The buffer chamber 55 is instrumental in ensuring an improved filling cycle of the pre-compression chamber 2' and of the baling chamber 1. The rotation of the belts 43/44 is actuated according to a speed cycle, wherein the belts are moving at a lower speed during filling of the pre-compression chamber, followed by a brief acceleration of the speed for propelling the crops that have accumulated in the pre-compression chamber 2' into the baling chamber 1. This cycle is synchronized with the reciprocating movement of the plunger 4, so that a fresh slice of pre-compressed crops is fed into the baling chamber when the plunger is retracted towards the back of the baling chamber.

A more detailed description of the belt-operated pre-compression chamber and stuffing mechanism of figure 4 can be found in Belgian patent documents BE1020497-A3 and BE1020721-A3.

## Claims

1. An agricultural baler for producing rectangular bales comprising :
• A pre-compression chamber (2,2'),
• a crop material supply means configured to supply harvested crop material to said pre-compression chamber (2,2'),
• a baling chamber (1) having an inlet port (3) and an outlet port (6), said baling chamber being configured to receive pre-compressed crop material through said inlet port from the pre-compression chamber (2,2'), the baling chamber being equipped with a reciprocating plunger (4) for forming said pre-compressed material into a rectangular shaped mass of compressed crops, and moving said mass towards said outlet port (6),
• a stuffing mechanism (20,20') configured to transport the pre-compressed crops from the pre-compression chamber to the baling chamber, the stuffing mechanism being synchronized with the plunger so that each stuffing action actuates at least one cycle of the plunger movement,
• a tying mechanism for tying together portions of said rectangular shaped mass so as to form separate bales,
• a bale-eject system, configured to move the bales that are in the baling chamber out of the baler, when no more crop is being compressed by the plunger,
**characterized in that** the baler comprises a means (25, 30) for automatically activating the stuffing mechanism (20, 20') when the bale eject system is set in motion, thereby actuating at least one cycle of the plunger action.

2. Baler according to claim 1, wherein said pre-compression chamber (2,2') comprises a pivotable sensor plate (22), configured to be pivoted downward as more crops are supplied to said pre-compression chamber, and further configured to trigger the stuffing mechanism when the sensor plate has reached a pre-defined position,
and wherein said means for automatically activating the stuffing mechanism comprises a means for pivoting the sensor plate (22) into said pre-defined position regardless of the amount of crops in the pre-compression chamber, when the bale eject system is set in motion, thereby actuating at least one cycle of the plunger action.

3. Baler according to claim 2, wherein said means for pivoting the sensor plate consists of or comprises a cable (25) connected between said sensor plate (22) and a movable portion (11) of the bale eject system.

4. Baler according to claim 3, wherein said bale-eject system is equipped with :
• bars (13) that are slidable in rails on the bottom of the baling chamber (1), and
• an actuator (10) mounted underneath the baling chamber,
said bars (13) being interconnected by a cross bar (11), said actuator (10) being configured to push said cross bar (11) and thereby said bars (13) forwards and backwards in the longitudinal direction of the baling chamber, said bars being provided with pivotable tines (14) for gripping the bales when the bars move in the forward direction and to glide past the bales when the bars move in the backward direction,
and wherein said cable is connected between said sensor plate (22) and said cross bar (11), so that the forward motion of said cross bar, actuated by the actuator (10), pivots the sensor plate into said pre-defined position, thereby actuating one cycle of the plunger action.

5. Baler according to claim 2, wherein said means for pivoting the sensor plate (22) comprises :
• a locally placed actuator, configured to pivot said sensor plate upon receiving an electric signal, and
• at least one movement detection sensor (30) mounted so as to detect a movement of a movable portion of the bale eject system with respect to the baling chamber,
and wherein said locally placed actuator is configured to pivot said sensor plate into said pre-defined position, upon receiving a signal generated by said movement detection sensor (30), thereby actuating at least one cycle of the plunger action.

6. Baler according to any one of the preceding claims, wherein said stuffing mechanism (20) comprises a set of stuffer forks (21).

7. Baler according to claim 1, wherein said pre-compression chamber (2) comprises a pivotable sensor plate (22), configured to be pivoted downward as more crops are supplied to said pre-compression chamber, and further configured to trigger the stuffing mechanism when the sensor plate has reached a pre-defined position, and wherein said stuffing mechanism (20) comprises a set of stuffer forks (21), actuatable by a mechanism comprising a trip latch (23) connected between said sensor plate (22) and a pivotable triangle plate (24) and wherein said means for automatically activating the stuffing mechanism (20) comprises :
• a locally placed actuator, configured to pivot said triangle plate (24) upon receiving an electric signal, and
• at least one movement detection sensor (30) mounted so as to detect a movement of a movable portion of the bale eject system with respect to the baling chamber,
and wherein said locally placed actuator is configured to pivot said triangle plate (24), upon receiving a signal generated by said movement detection sensor (30), thereby actuating at least one cycle of the plunger action.

8. Baler according to claim 1, wherein said stuffing mechanism (20') comprises a set of rotatable belts (43,44) forming an upper and lower wall of the pre-compression chamber (2'), said belts being configured to propel the crops that are present within said pre-compression chamber into the baling chamber (1) by an accelerated movement of said belts, and wherein said means for automatically activating the stuffing mechanism (20') comprises at least one movement detection sensor (30) mounted so as to detect a movement of a movable portion of the bale eject system with respect to the baling chamber, and wherein said belts are configured to perform said accelerated movement regardless of the amount of crops in the pre-compression chamber (2'), upon receiving a signal generated by said movement detection sensor (30), thereby actuating at least one cycle of the plunger action.

9. Baler according to claim 5, 7 or 8, wherein:
said bale-eject system is equipped with:
• bars (13) that are slidable in rails on the bottom of the baling chamber (1): and
• an actuator (10) mounted underneath the baling chamber,
said bars (13) being interconnected by a cross bar (11), said actuator (10) being configured to push said cross bar (11) and thereby said bars (13) forwards and backwards in the longitudinal direction of the baling chamber, said bars being provided with pivotable tines (14) for gripping the bales when the bars move in the forward direction and to glide past the bales when the bars move in the backward direction; and
said cross bar (11) is mounted between two vertical side plates (12), and wherein said movement detection sensor (30) is mounted so as to detect movement of one of said vertical side plates (12).

10. A method for operating an agricultural baler comprising :
• a pre-compression chamber (2,2'),
• a crop material supply means configured to supply harvested crop material to said pre-compression chamber (2,2'),
• a baling chamber (1) having an inlet port (3) and an outlet port (6), said baling chamber being configured to receive pre-compressed material through said inlet port from the pre-compression chamber (2,2'), the baling chamber being equipped with a reciprocating plunger (4) for forming said pre-compressed material into a rectangular shaped mass of compressed crops, and moving said mass towards said outlet port,
• a stuffing mechanism (20,20') configured to transport the pre-compressed crops from the pre-compression chamber to the baling chamber, the stuffing mechanism being synchronized with the plunger so that each stuffing action actuates one cycle of the plunger movement,
• a tying mechanism for tying together portions of said rectangular shaped mass so as to form separate bales,
• a bale-eject system, configured to move the bales that are in the baling chamber out of the baler, when no more crop is being compressed by the plunger,
the method comprising the steps of:
• producing a set of rectangular bales during a harvesting run, a number of bales remaining in the baling chamber (1) at the end of said run,
• activating the bale-eject system for removing said remaining bales from the baling chamber,
• further removing said remaining bales from the baling chamber by the bale-eject system,
**characterised in that** said activation of the bale-eject system triggers at least one stuffing action of the stuffing mechanism (20,20'), thereby actuating at least one cycle of the plunger action, said cycle initiating movement of said remaining bales towards the outlet port (6) of the baling chamber.

11. Method according to claim 10, wherein said pre-compression chamber (2,2') comprises a pivotable sensor plate (22), configured to be pivoted downward as more crops are supplied to said pre-compression chamber, and further configured to trigger the stuffing mechanism when the sensor plate has reached a pre-defined position,
and wherein the step of activating the bale-eject system triggers the pivoting of the sensor plate (22) into said pre-defined position regardless of the amount of crops in the pre-compression chamber, thereby actuating at least one cycle of the plunger action.

12. Method according to claim 11, wherein the sensor plate is pivoted by a cable (25) connected between said sensor plate and a movable portion (11) of the bale eject system.

13. Method according to claim 12, wherein said bale-eject system is equipped with :
• bars (13) that are slidable in rails on the bottom of the baling chamber (1), and
• an actuator (10) mounted underneath the baling chamber,
said bars (13) being interconnected by a cross bar (11), said actuator being configured to push said cross bar (11) and thereby said bars (13) forwards and backwards in the longitudinal direction of the baling chamber, said bars being provided with pivotable tines (14) for gripping the bales when the bars move in the forward direction and to glide past the bales when the bars move in the backward direction,
and wherein said cable (25) is connected between said sensor plate (22) and said cross bar (11), so that the forward motion of said cross bar, actuated by the actuator (10), pivots the sensor plate into said pre-defined position, thereby actuating one cycle of the plunger action.

14. Method according to claim 11, wherein the sensor plate (22) is pivoted by a locally placed actuator, configured to pivot said sensor plate upon receiving an electric signal, and wherein the baler further comprises at least one movement detection sensor (30) mounted so as to detect a movement of a movable portion of the bale eject system with respect to the baling chamber, and wherein said locally placed actuator is configured to pivot said sensor plate into said pre-defined position, upon receiving a signal generated by said movement detection sensor (30), thereby actuating at least one cycle of the plunger action.

15. Method according to any one of claims 10 to 14, wherein said stuffing mechanism (20) comprises a set of stuffer forks (21).

16. Method according to claim 10, wherein said pre-compression chamber (2) comprises a pivotable sensor plate (22), configured to be pivoted downward as more crops are supplied to said pre-compression chamber, and further configured to trigger the stuffing mechanism when the sensor plate has reached a pre-defined position, and wherein said stuffing mechanism (20) comprises a set of stuffer forks (21), actuatable by a mechanism comprising a trip latch (23) connected between said sensor plate (22) and a pivotable triangle plate (24) and wherein said triangle plate (24) is pivoted by a locally placed actuator, configured to pivot said triangle plate (24) upon receiving an electric signal, the baler further comprising at least one movement detection sensor (30) mounted so as to detect a movement of a movable portion of the bale eject system with respect to the baling chamber, and wherein said locally placed actuator is configured to pivot said triangle plate (24), upon receiving a signal generated by said movement detection sensor (30), thereby actuating at least one cycle of the plunger action.

17. Method according to claim 10, wherein said stuffing mechanism (20') comprises a set of rotatable belts (43,44) forming an upper and lower wall of the pre-compression chamber (2'), said belts being configured to propel the crops that are present within said pre-compression chamber into the baling chamber by an accelerated movement of said belts, and wherein the baler comprises at least one movement detection sensor (30) mounted so as to detect a movement of a movable portion of the bale eject system with respect to the baling chamber, and wherein said belts are configured to perform said accelerated movement regardless of the amount of crops in the pre-compression chamber (2'), upon receiving a signal generated by said movement detection sensor (30), thereby actuating at least one cycle of the plunger action.

## Patentansprüche

1. Eine landwirtschaftliche Ballenpresse zur Erzeugung von Rechteckballen, mit:
• einer Vorkompressions-Kammer (2, 2'),
• einer Erntematerial-Zuführungseinrichtung, die zur Zuführung von geerntetem Erntematerial an die Vorkompressions-Kammer (2, 2') konfiguriert ist,
• einer Ballenkammer (1) mit einer Einlassöffnung (3) und einer Auslassöffnung (6), wobei bei die Ballenkammer so konfiguriert ist, dass sie vorkomprimiertes Erntematerial durch die Einlassöffnung hindurch von der Vorkompressions-Kammer (2, 2') empfängt, wobei die Ballenkammer mit einem sich hin und her bewegenden Presskolben (4) zur Formung des vorkomprimierten Materials zu einer rechtwinklig geformten Masse von komprimiertem Erntematerial und zur Bewegung der Masse in Richtung auf die Auslassöffnung (6) ausgerüstet ist,
• einem Stopfer-Mechanismus (20, 20'), der zum Transport des vorkomprimierten Erntematerials von der Vorkompressions-Kammer an die Ballenkammer konfiguriert ist, wobei der Stopfer-Mechanismus mit dem Presskolben synchronisiert ist, so dass jede Stopfaktion zumindest einen Zyklus der Presskolben-Bewegung auslöst,
• einem Bindemechanismus zum Zusammenbinden von Teilen der rechteckförmigen Masse zur Bildung von getrennten Ballen,
• einem Ballenauswurfsystem, das zur Bewegung der sich in der Ballenkammer befindenden Ballen, aus der Ballenpresse heraus konfiguriert ist, wenn kein weiteres Erntematerial durch den Presskolben komprimiert wird,
**dadurch gekennzeichnet, dass** die Ballenpresse eine Einrichtung (25, 30) zum automatischen Aktivieren des Stopfermechanismus (20, 20') umfasst, wenn das Ballenauswurfsystem in Bewegung gesetzt wird, wodurch zumindest ein Zyklus der Presskolben-Aktion ausgelöst wird.

2. Ballenpresse nach Anspruch 1, bei der die Vorkompressions-Kammer (2, 2') eine schwenkbare Sensor-Platte (22) umfasst, die für ein Verschwenken nach unten konfiguriert ist, wenn weiteres Erntematerial der Vorkompressions-Kammer zugeführt wird, und die weiterhin zum Auslösen des Stopfer-Mechanismus konfiguriert sind, wenn die Sensor-Platte eine vordefinierte Position erreicht hat, und wobei die Einrichtung zum automatischen Aktivieren des Stopfer-Mechanismus eine Einrichtung zum Verschwenken der Sensor-Platte (20) in die vordefinierte Position unabhängig von der Menge an Erntematerial in der Vorkompressions-Kammer umfasst, wenn das Ballenauswurfsystem in Bewegung gesetzt wird, wodurch zumindest ein Zyklus der Presskolben-Aktion ausgelöst wird.

3. Ballenpresse nach Anspruch 2, bei der die Einrichtung zum Verschwenken der Sensor-Platte aus einem Seil (25) besteht oder dieses umfasst, das zwischen der Sensor-Platte (22) und einem beweglichen Teil (11) des Ballenauswurfsystems angeschlossen ist.

4. Ballenpresse nach Anspruch 3, bei der das Ballenauswurfsystem mit Folgendem ausgerüstet ist:
• Stangen (13), die in Schienen auf dem Boden der Ballenkammer (1) verschiebbar sind, und
• einer Betätigungseinrichtung (10), die unterhalb der Ballenkammer befestigt ist,
wobei die Stangen (13) durch eine Querstange (11) verbunden sind, wobei die Betätigungseinrichtung (10) zum Verschieben der Querstange (11) und damit der Stangen (13) vorwärts und rückwärts in der Längsrichtung der Ballenkammer konfiguriert ist, wobei die Stangen mit verschwenkbaren Zinken (14) versehen sind, um die Ballen zu ergreifen, wenn sich die Stangen in der Vorwärtsrichtung bewegen, und um an den Ballen vorbei zu gleiten, wenn sich die Stangen in der Rückwärtsrichtung bewegen,
und wobei das Seil zwischen der Sensor-Platte (22) und der Querstange (11) angeschlossen ist, so dass die Vorwärtsbewegung des Querbalkens, die durch die Betätigungseinrichtung (10) betätigt wird, die Sensor-Platte in die vordefinierte Position verschwenkt, wodurch ein Zyklus der Presskolben-Aktion ausgelöst wird.

5. Ballenpresse nach Anspruch 2, bei der die Einrichtung zum Verschwenken der Sensor-Platte (22) Folgendes umfasst:
• ein örtlich angeordnetes Stellglied, das zum Verschwenken der Sensor-Platte bei Empfang eines elektrischen Signals konfiguriert ist, und
• zumindest einen Bewegungsdetektions-Sensor (30), der derart befestigt ist, dass er eine Bewegung des beweglichen Teils des Ballenauswurfsystems gegenüber der Ballenkammer erfasst,
und wobei das örtlich angeordnete Stellglied zum Verschwenken der Sensor-Platte in die vordefinierte Position bei Empfang eines Signals konfiguriert ist, das von dem Bewegungsdetektions-Sensor (30) erzeugt wird, wodurch zumindest ein Zyklus der Presskolben-Aktion ausgelöst wird.

6. Ballenpresse nach einem der vorhergehenden Ansprüche, bei der der Stopfer-Mechanismus (20) einen Satz von Stopfer-Gabeln (21) umfasst.

7. Ballenpresse nach Anspruch 1, bei der die Vorkompressions-Kammer (2) eine schwenkbare Sensor-Platte (22) umfasst, die zum Verschwenken nach unten hin konfiguriert ist, wenn weiteres Erntematerial der Vorkompressions-Kammer zugeführt wird, und die weiterhin zur Auslösung des Stopfer-Mechanismus konfiguriert ist, wenn die Sensor-Platte eine vordefinierte Position erreicht hat, und wobei der Stopfer-Mechanismus (20) einen Satz von Stopfer-Gabeln (21) umfasst, die durch einen Mechanismus betätigbar sind, die einen Auslöse-Riegel (23) umfasst, der zwischen der Sensor-Platte (22) und einer schwenkbaren Dreieck-Platte (24) angeschlossen ist, und wobei die Einrichtungen zur automatischen Aktivierung des Stopfer-Mechanismus (20) Folgendes umfasst:
• ein örtlich angeordnetes Stellglied, das zum Verschwenken der Dreieck-Platte (24) bei Empfang eines elektrischen Signals konfiguriert ist, und
• zumindest einen Bewegungsdetektions-Sensor (30) der zur Erfassung einer Bewegung eines beweglichen Teils des Ballenauswurfsystems gegenüber der Ballenkammer befestigt ist,
und wobei das örtlich angeordnete Stellglied zum Verschwenken der Dreieck-Platte (24) bei Empfang eines Signals konfiguriert ist, das von dem Bewegungsdetektions-Sensor (30) erzeugt wird, wodurch zumindest ein Zyklus der Presskolben-Aktion ausgelöst wird.

8. Ballenpresse nach Anspruch 1, bei der der Stopfer-Mechanismus (20') einen Satz von drehbaren Riemen (43, 44) umfasst, die eine obere und eine untere Wand der Vorkompressions-Kammer (2') bilden, wobei die Riemen so konfiguriert sind, dass sie das Erntematerial, das in der Vorkompressions-Kammer vorhanden ist, in die Ballenkammer (1) durch eine beschleunigte Bewegung der Riemen antreibt, und wobei die Einrichtungen zur automatischen Aktivierung des Stopfer-Mechanismus (20') zumindest einen Bewegungsdetektions-Sensor (30) umfassen, der derart befestigt ist, dass er eine Bewegung eines beweglichen Teils des Ballenauswurfsystems gegenüber der Ballenkammer erfasst, und wobei die Riemen zur Ausführung der beschleunigten Bewegung unabhängig von der Menge an Erntematerial in der Vorkompressions-Kammer (2') bei Empfang eines Signals konfiguriert sind, das von dem Bewegungsdetektions-Sensor (30) erzeugt wird, wodurch zumindest ein Zyklus der Presskolben-Aktion ausgelöst wird.

9. Ballenpresse nach Anspruch 5, 7 oder 8, bei der:
das Ballenauswurfsystem mit Folgendem ausgerüstet ist:
• Stangen (13), die in Schienen am Boden der Presskammer (1) gleitend verschiebbar sind;
und
• einem Stellglied (10), das unterhalb der Ballenkammer befestigt ist,
wobei die Stangen (13) durch eine Querstange (11) miteinander verbunden sind, wobei das Stellglied (10) zum Drücken der Querstange (11) und damit der Stangen (13) vorwärts und rückwärts in der Längsrichtung der Ballenkammer konfiguriert ist, wobei die Stangen mit schwenkbaren Zinken (14) zum Ergreifen der Ballen versehen sind, wenn sich die Stangen in der Vorwärtsrichtung bewegen, während sie an dem Ballen vorbei gleiten, wenn sich die Stangen in der Rückwärtsrichtung bewegen; und
wobei die Querstange (11) zwischen zwei vertikalen Seitenplatten (12) befestigt ist, und wobei der Bewegungsdetektions-Sensor (30) derart befestigt ist, dass er die Bewegung von einer der vertikalen Seitenplatten (12) erfasst.

10. Ein Verfahren zum Betrieb einer landwirtschaftlichen Ballenpresse mit:
• einer Vorkompressions-Kammer (2, 2'),
• einer Erntematerial-Zuführungseinrichtung, die zur Zuführung von geerntetem Erntematerial an die Vorkompressions-Kammer (2, 2') konfiguriert ist,
• einer Ballenkammaer (1), die eine Einlassöffnung (3) und eine Auslassöffnung (6) aufweist, wobei die Ballenkammer zum Empfang von vorkomprimiertem Material von der Vorkompressions-Kammer (2, 2') durch die Einlassöffnung hindurch konfiguriert ist, wobei die Ballenkammer mit einem sich hin und herbewegenden Presskolben (4) zum Formen des vorkomprimierten Materials in eine rechtwinklig geformte Masse von komprimiertem Erntematerial und zur Bewegung der Masse in Richtung auf die Auslassöffnung ausgerüstet ist,
• einem Stopfer-Mechanismus (20, 20') der zum Transport des vorkomprimierten Erntematerials von der Vorkompressions-Kammer an die Ballenkammer konfiguriert ist, wobei der Stopfer-Mechanismus mit dem Presskolben derart synchronisiert ist, dass jeder Stopfvorgang einen Zyklus der Presskolben-Bewegung auslöst,
• einem Bindemechanismus zum Zusammenbinden von Teilen der rechtwinklig geformten Masse zur Bildung getrennter Ballen,
• einem Ballenauswurfsystem, das zur Bewegung der Ballen, die sich in der Ballenkammer befinden, aus der Ballenpresse heraus konfiguriert ist, wenn kein weiteres Erntematerial durch den Presskolben komprimiert wird,
wobei das Verfahren die folgenden Schritte umfasst:
• Erzeugen eines Satzes von Rechteckballen während eines Erntevorganges, wobei eine Anzahl von Ballen nach dem Ende des Erntevorganges in der Ballenkammer (1)verbleibt,
• Aktivieren des Ballenauswurfsystems zum Entfernen der verbleibenden Ballen aus der Ballenkammer,
• weiteres Entfernen der verbleibenden Ballen aus der Ballenkammer durch das Ballenauswurfsystem,
**dadurch gekennzeichnet, dass** die Aktivierung des Ballenauswurfsystems zumindest einen Stopfvorgang des Stopfer-Mechanismus (20, 20') auslöst, wodurch zumindest ein Zyklus der Presskolben-Aktion ausgelöst wird, wobei der Zyklus die Bewegung der verbleibenden Ballen in Richtung auf die Auslassöffnung der Ballenkammer einleitet.

11. Verfahren nach Anspruch 10, bei dem die Vorkompressions-Kammer (2, 2') eine schwenkbare Sensor-Platte (22) umfasst, die zum Verschwenken nach unten konfiguriert ist, wenn weiteres Erntematerial der Vorkompressions-Kammer zugeführt wird, und die weiterhin zum Auslösen des Stopfer-Mechanismus konfiguriert ist, wenn die Sensor-Platte eine vordefinierte Position erreicht hat,
und wobei der Schritt der Aktivierung des Ballenauswurfsystems das Verschwenken der Sensor-Platte (22) in die vordefinierte Position unabhängig von der Menge an Erntematerial in der Vorkompressions-Kammer auslöst, wodurch zumindest ein Zyklus der Presskolben-Aktion ausgelöst wird.

12. Verfahren nach Anspruch 11, bei dem die Sensor-Platte durch ein Seil (25) verschwenkt wird, das zwischen der Sensor-Platte und einem beweglichen Teil (11) des Ballenauswurfsystems angeschlossen ist.

13. Verfahren nach Anspruch 12, bei dem das Ballenauswurfsystem mit Folgendem ausgerüstet ist:
• Stangen (13), die in Schienen am Boden der Ballenkammer (1) verschiebbar sind, und
• einem Stellglied (10), das unterhalb der Ballenkammer befestigt ist,
wobei die Stangen (13) miteinander über eine Querstange (11) verbunden sind, wobei das Stellglied zum Drücken der Querstange (11) und damit der Stangen (13) vorwärts und rückwärts in der Längsrichtung der Ballenkammer konfiguriert ist, wobei die Stangen mit schwenkbaren Zinken (14) zum Ergreifen der Ballen, wenn sich die Stangen in der Vorwärtsrichtung bewegen, und zum Gleiten entlang der Ballen versehen sind, wenn sich die Stangen in der Rückwärtsrichtung bewegen,
und wobei das Seil zwischen der Sensor-Platte (22) und der Querstange (11) derart angeschlossen ist, dass die Vorwärtsbewegung der Querstange, die durch das Stellglied (10) betätigt wird, die Sensor-Platte in die vordefinierte Position verschwenkt, wodurch ein Zyklus der Presskolben-Aktion ausgelöst wird.

14. Verfahren nach Anspruch 11, bei dem die Sensor-Platte (22) durch ein örtlich angeordnetes Stellglied verschwenkt wird, das zum Verschwenken der Sensor-Platte bei Empfang eines elektrischen Signals konfiguriert ist, und wobei die Ballenpresse weiterhin zumindest einen Bewegungsdetektions-Sensor (30) umfasst, der zur Erfassung einer Bewegung eines beweglichen Teils des Ballenauswurfsystems gegenüber der Ballenkammer befestigt ist, und wobei das örtlich angeordnete Stellglied zum Verschwenken der Sensor-Platte in die vordefinierte Position bei Empfang eines Signals konfiguriert ist, das von dem Bewegungsdetektions-Sensor (30) erzeugt wird, wodurch zumindest ein Zyklus der Presskolben-Aktion ausgelöst wird.

15. Verfahren nach irgendeinem der Ansprüche 10 bis 14, bei dem der Stopfer-Mechanismus (20) einen Satz von Stopfer-Gabeln (21) umfasst.

16. Verfahren nach Anspruch 10, bei dem die Vorkompressions-Kammer (2) eine Sensor-Platte (22) umfasst, die zum Verschwenken nach unten hin konfiguriert ist, wenn weiteres Erntematerial der Vorkompressions-Kammer zugeführt wird, und die weiterhin zum Auslösen des Stopfer-Mechanismus konfiguriert ist, wenn die Sensor-Platte eine vordefinierte Position erreicht hat, und wobei der Stopfer-Mechanismus (20) eine Satz von Stopfer-Gabeln (21) umfasst, die durch einen Mechanismus betätigbar sind, der einen Auslöse-Riegel (23) umfasst, der zwischen der Sensor-Platte (22) und einer verschwenkbaren Dreieck-Platte (24) angeschlossen ist, und wobei die Dreieck-Platte (24) durch ein örtlich angeordnetes Stellglied verschwenkt wird, das zum Verschwenken der Dreieck-Platte (24) bei Empfang eines elektrischen Signals konfiguriert ist, wobei die Ballenpresse weiterhin zumindest einen Bewegungsdetektions-Sensor (30) umfasst, der zur Erfassung einer Bewegung eines beweglichen Teils des Ballenauswurfsystems gegenüber der Ballenkammer befestigt ist, und wobei das örtlich angeordnete Stellglied zum Verschwenken der Dreieck-Platte (24) bei Empfang eines von dem Bewegungsdetektions-Sensor (30) erzeugten Signal konfiguriert ist, wodurch zumindest ein Zyklus der Presskolben-Aktion ausgelöst wird.

17. Verfahren nach Anspruch 10, bei dem der Stopfer-Mechanismus (20') einen Satz von drehbaren Riemen (43, 44) umfasst, die eine obere und eine untere Wand der Vorkompressions-Kammer (2') bilden, wobei die Riemen zum Antrieb des sich in der Vorkompressions-Kammer befindenden Erntematerials in die Ballenkammer durch eine beschleunigte Bewegung der Riemen konfiguriert ist, und wobei die Ballenpresse zumindest einen Bewegungsdetektions-Sensor (30) umfasst, der derart befestigt ist, dass er eine Bewegung eines beweglichen Teils des Ballenauswurfsystems gegenüber der Ballenkammer erfasst, und wobei die Riemen zur Ausführung der beschleunigten Bewegung unabhängig von der Menge des Erntematerials in der Vorkompressions-Kammer (2') bei Empfang eines Signals konfiguriert sind, das von dem Bewegungsdetektions-Sensor (30) erzeugt wird, wodurch zumindest ein Zyklus der Presskolben-Aktion ausgelöst wird.

## Revendications

1. Ramasseuse-presse à balles agricole de production de balles rectangulaires comprenant :
• une chambre de pré-compression (2,2'),
• un moyen d'alimentation de matériau de récolte conçu pour alimenter du matériau récolté jusqu'à la dite chambre de pré-compression (2,2'),
• une chambre de mise en balles (1) comportant un orifice d'entrée (3) et un orifice de sortie (6), ladite chambre de mise en balles étant conçue pour recevoir du matériau de récolte pré-compressé par ledit orifice d'entrée depuis la chambre de pré-compression (2,2'), et la chambre de mise en balles étant équipée d'un piston à mouvement va-et-vient (4) pour former une masse de forme rectangulaire de produit de récolte compressé à partir du dit matériau pré-compressé, et déplacer ladite masse vers l'orifice de sortie (6),
• un mécanisme de bourrage (20,20') conçu pour transporter le produit de récolte pré-compressé depuis la chambre de pré-compression jusqu'à la chambre de mise en balles, le mécanisme de bourrage étant synchronisé avec le piston de telle sorte que chaque action de bourrage déclenche au moins un cycle de mouvement du piston,
• un mécanisme de ficelage pour ficeler ensemble des parties de ladite masse de forme rectangulaire de façon à former des balles individuelles,
• un système d'éjection de balle, conçu pour déplacer hors de la ramasseuse-presse à balles les balles qui sont dans la chambre de mise en balles lorsqu'il n'y a plus de produit de récolte comprimé par le piston,
**caractérisée en ce que** la ramasseuse-presse à balles comprend un moyen (25, 30) permettant d'activer automatiquement le mécanisme de bourrage (20, 20') lorsque le système d'éjection de balle est mis en mouvement, en déclenchant de cette façon au moins un cycle d'opération du piston.

2. Ramasseuse-presse selon la revendication 1, dans laquelle ladite chambre de pré-compression (2,2') comprend une plaque de capteur pivotante (22), conçue pour pivoter vers le bas lorsque qu'une grande quantité de produit de récolte est fournie à ladite chambre de pré-compression, et conçue en plus pour déclencher le mécanisme de bourrage lorsque la plaque de capteur a atteint une position prédéfinie, ledit moyen permettant d'activer automatiquement le mécanisme de bourrage comprend un moyen pour faire pivoter la plaque de capteur (22) dans ladite position prédéfinie, indépendamment de la quantité des produits de récolte dans la chambre de pré-compression, lorsque le système d'éjection de balle est mis en mouvement, en déclenchant de cette façon au moins un cycle d'opération du piston.

3. Ramasseuse-presse selon la revendication 2, dans laquelle ledit moyen pour faire pivoter la plaque de capteur consiste en ou comprend un câble (25) connecté entre ladite plaque de capteur (22) et une partie mobile (11) du système d'éjection de balle.

4. Ramasseuse-presse selon la revendication 3, dans laquelle ledit système d'éjection de balle est équipé :
• de barres (13) qui sont coulissantes dans des rails au fond de la chambre de mise en balles (1), et
• d'un actionneur (10) monté en dessous de la chambre de mise en balles,
les dites barres (13) étant interconnectées par une barre transversale (11), ledit actionneur (10) étant conçu pour pousser ladite barre transversale (11) et par ce moyen lesdites barres (13) vers l'avant et vers l'arrière dans la direction longitudinale de la chambre de mise en balles, lesdites barres étant équipées de dents pivotantes (14) pour saisir les balles lorsque les barres se déplacent dans la direction avant et pour glisser au-delà des balles lorsque les barres se déplacent dans la direction arrière,
et ledit câble étant connecté entre ladite plaque de capteur (22) et ladite barre transversale (11), de telle sorte que le mouvement vers l'avant de ladite barre transversale, déclenché par l'actionneur (10), fait pivoter la plaque de capteur dans ladite position prédéfinie, en déclenchant de cette façon un cycle d'opération du piston.

5. Ramasseuse-presse selon la revendication 2, dans laquelle ledit moyen pour faire pivoter la plaque de capteur (22) comprend :
• un actionneur disposé localement, conçu pour faire pivoter ladite plaque de capteur à la réception d'un signal électrique, et
• au moins un capteur de détection de mouvement (30) monté de manière à détecter un mouvement d'une partie mobile du système d'éjection de balle par rapport à la chambre de mise en balles,
et ledit actionneur disposé localement étant conçu pour faire pivoter ladite plaque de capteur dans ladite position prédéfinie, après la réception d'un signal produit par ledit capteur de détection de mouvement (30), en déclenchant de cette façon au moins un cycle d'opération du piston.

6. Ramasseuse-presse à balles selon l'une quelconque des revendications précédentes, dans laquelle ledit mécanisme de bourrage (20) comprend une série de fourches de bourrage (21).

7. Ramasseuse-presse selon la revendication 1, dans laquelle ladite chambre de pré-compression (2) comprend une plaque de capteur pivotante (22), conçue pour pivoter vers le bas lorsque qu'une grande quantité de produit de récolte est fournie à ladite chambre de pré-compression, et conçue en plus pour déclencher le mécanisme de bourrage lorsque la plaque de capteur a atteint une position prédéfinie, en ledit mécanisme de bourrage (20) comprenant une série de fourches de bourrage (21), actionnables par un mécanisme comprenant un loquet de déclencheur (23) connecté entre ladite plaque de capteur (22) et une plaque triangulaire pivotante (24), et ledit moyen permettant d'activer automatiquement le dispositif de bourrage (20) comprend :
• un actionneur disposé localement, conçu pour faire pivoter ladite plaque triangulaire pivotante (24) à la réception d'un signal électrique, et
• au moins un capteur de détection de mouvement (30) monté de manière à détecter un mouvement d'une partie mobile du système d'éjection de balle par rapport à la chambre et dans laquelle ledit actionneur disposé localement est conçu pour faire pivoter ladite plaque triangulaire (24) à la réception d'un signal produit par ledit capteur de détection de mouvement (30), en déclenchant de cette façon au moins un cycle d'opération du piston.

8. Ramasseuse-presse selon la revendication 1, dans laquelle ledit mécanisme de bourrage (20') comprend une série de sangles rotatives (43, 44) formant une paroi supérieure et inférieure de la chambre de pré-compression (2'), lesdites sangles étant configurées pour propulser les produits de récolte qui sont présents à l'intérieur de ladite chambre de pré-compression dans la chambre de mise en balles (1) par un mouvement accéléré des dites sangles, et ledit moyen permettant d'activer automatiquement le dispositif de bourrage (20') comprend au moins un capteur de détection de mouvement (30) monté de façon à détecter un mouvement d'une partie mobile du système d'éjection de balle par rapport à la chambre de mise en balles, et lesdites sangles sont conçues pour exécuter ledit mouvement accéléré, indépendamment de la quantité de produit de récolte dans la chambre de pré-compression (2'), après la réception d'un signal produit par ledit capteur de détection de mouvement (30), en déclenchant de cette façon au moins un cycle d'opération du piston.

9. Ramasseuse-presse selon les revendications 5, 7 ou 8, dans laquelle :
ledit système d'éjection de balle est équipé :
• de barres (13) qui sont coulissantes dans des rails au fond de la chambre de mise en balles (1), et
• d'un actionneur (10) monté en dessous de la chambre de mise en balles,
les dites barres (13) étant interconnectées par une barre transversale (11), ledit actionneur (10) étant conçu pour pousser ladite barre transversale (11) et par ce moyen lesdites barres (13) vers l'avant et vers l'arrière dans la direction longitudinale de la chambre de mise en balles, lesdites barres étant équipées de dents pivotantes (14) pour saisir les balles lorsque les barres se déplacent dans la direction avant et pour glisser au-delà des balles lorsque les barres se déplacent dans la direction arrière; et
ladite barre transversale (11) est montée entre deux plaques latérales verticales (12), et ledit capteur de détection de mouvement (30) est monté de façon à détecter un mouvement de l'une des dites plaques latérales verticales (12).

10. Procédé pour faire fonctionner une ramasseuse-presse à balles comprenant :
• une chambre de pré-compression (2,2'),
• un moyen d'alimentation de matériau de récolte conçu pour alimenter du matériau récolté jusqu'à la dite chambre de pré-compression (2,2'),
• une chambre de mise en balles (1) comportant un orifice d'entrée (3) et un orifice de sortie (6), ladite chambre de mise en balles étant conçue pour recevoir du matériau de récolte pré-compressé par ledit orifice d'entrée depuis la chambre de pré-compression (2,2'), et la chambre de mise en balles étant équipée d'un piston à mouvement va-et-vient (4) pour former une masse de forme rectangulaire de produit de récolte compressé à partir du dit matériau pré-compressé, et déplacer ladite masse vers l'orifice de sortie,
• un mécanisme de bourrage (20, 20') conçu pour transporter le produit de récolte pré-compressé depuis la chambre de pré-compression jusqu'à la chambre de mise en balles, le mécanisme de bourrage étant synchronisé avec le piston de telle sorte que chaque action de bourrage déclenche au moins un cycle de mouvement du piston,
• un mécanisme de ficelage pour ficeler ensemble des parties de ladite masse de forme rectangulaire de façon à former des balles individuelles,
• un système d'éjection de balle, conçu pour déplacer hors de la ramasseuse-presse à balles les balles qui sont dans la chambre de mise en balles lorsqu'il n'y a plus de produit de récolte comprimé par le piston,
le procédé comprenant les étapes consistant à :
• produire une série de balles rectangulaires pendant un parcours de récolte, un nombre de balles restant dans la chambre de mise en balles (1) à la fin du dit parcours,
• activer le système d'éjection de balles pour déplacer les dites balles restantes depuis la chambre de mise en balles,
• enlever les dites balles restantes de la chambre de mise en balles par le système d'éjection de balles,
**caractérisé en ce que** ladite activation du système d'éjection de balle déclenche au moins une opération de bourrage du mécanisme de bourrage (20, 20'), en déclenchant de cette façon au moins un cycle d'opération du piston, ledit cycle initiant un déplacement des dites balles restantes vers l'orifice de sortie (6) de la chambre de mise en balles.

11. Procédé selon la revendication 1, selon lequel ladite chambre de pré-compression (2,2') comprend une plaque de capteur pivotante (22), conçue pour pivoter vers le bas lorsque qu'une grande quantité de produit de récolte est fournie à ladite chambre de pré-compression, et conçue en plus pour déclencher le mécanisme de bourrage lorsque la plaque de capteur a atteint une position prédéfinie,
et selon lequel l'étape d'activation de système d'éjection de balles déclenche le pivotement de la plaque de capteur pivotante (22) dans ladite position prédéfinie, indépendamment de la quantité des produits de récolte dans la chambre de pré-compression

12. Procédé selon la revendication 11, selon lequel la plaque de capteur est pivotée par un câble (25) connecté entre ladite plaque de capteur et une partie mobile (11) du système d'éjection de balle.

13. Procédé selon la revendication 12, selon lequel ledit système d'éjection de balle est équipé :
• de barres (13) qui sont coulissantes dans des rails au fond de la chambre de mise en balles (1), et
• d'un actionneur (10) monté en dessous de la chambre de mise en balles,
les dites barres (13) étant interconnectées par une barre transversale (11), ledit actionneur (10) étant conçu pour pousser ladite barre transversale (11) et par ce moyen lesdites barres (13) vers l'avant et vers l'arrière dans la direction longitudinale de la chambre de mise en balles, lesdites barres étant équipées de dents pivotantes (14) pour saisir les balles lorsque les barres se déplacent dans la direction avant et pour glisser au-delà des balles lorsque les barres se déplacent dans la direction arrière,
et selon lequel ledit câble (25) est connecté entre ladite plaque de capteur (22) et ladite barre transversale (11), de telle sorte que le mouvement vers l'avant de ladite barre transversale, déclenché par l'actionneur (10), fait pivoter la plaque de capteur dans ladite position prédéfinie, en déclenchant de cette façon un cycle d'opération du piston.

14. Procédé selon la revendication 11, selon lequel la plaque de capteur (22) est pivotée par un actionneur disposé localement, conçu pour faire pivoter ladite plaque de capteur à la réception d'un signal électrique, la ramasseuse-presse à balles comprenant au moins un capteur de détection de mouvement (30) monté de façon à détecter un mouvement d'une partie mobile du système d'éjection de balle par rapport à la chambre de mise en balles, et ledit actionneur disposé localement étant configuré pour faire pivoter ladite plaque de capteur dans ladite position prédéfinie, à la réception d'un signal produit par le dit capteur de détection de mouvement (30), en déclenchant de cette façon au moins un cycle d'opération du piston.

15. Procédé selon l'une quelconque des revendications 10 à 14, selon lequel ledit mécanisme de bourrage (20) comprend une série de fourches de bourrage (21).

16. Procédé selon la revendication 10, **caractérisé en ce que** ladite chambre de pré-compression (2) comprend une plaque de capteur pivotante (22), conçue pour pivoter vers le bas lorsqu'une grande quantité de produits de récolte est fournie à la dite chambre de pré-compression, et conçue en plus pour déclencher le mécanisme de bourrage lorsque la plaque de capteur a atteint une position prédéfinie, **en ce que** ledit mécanisme de bourrage (20) comprend une série de fourches de bourrage (21), actionnables par un mécanisme comprenant un loquet de déclencheur (23) connecté entre ladite plaque de capteur (22) et une plaque triangulaire pivotante (24), et **en ce que** ladite plaque triangulaire (24) est pivotée par un actionneur disposé localement, conçu pour faire pivoter ladite plaque triangulaire (24) à la réception d'un signal électrique, le ramasseuse-presse à balles comprenant en plus au moins un capteur de détection de mouvement (30) monté de façon à détecter un mouvement d'une partie mobile du système d'éjection de balle par rapport à la chambre de mise en balles, et ledit actionneur disposé localement est conçu pour faire pivoter ladite plaque triangulaire (24) à la réception d'un signal produit par ledit capteur de détection de mouvement (30), en déclenchant de cette façon au moins un cycle d'opération du piston.

17. Procédé selon la revendication 10, selon lequel ledit mécanisme de bourrage (20') comprend une série de sangles rotatives (43,44) formant une paroi supérieure et inférieure de la chambre de pré-compression (2'), lesdites sangles étant configurées pour propulser les produits de récolte qui sont présents à l'intérieur de ladite chambre de pré-compression dans la chambre de mise en balles (1) par un mouvement accéléré des dites sangles, et le ramasseuse-presse à balles comprenant en plus au moins un capteur de détection de mouvement (30) monté de façon à détecter un mouvement d'une partie mobile du système d'éjection de balle par rapport à la chambre de mise en balles, et ledit actionneur disposé localement est conçu pour faire pivoter ladite plaque triangulaire (24) à la réception d'un signal produit par ledit capteur de détection de mouvement (30), en déclenchant de cette façon au moins un cycle d'opération du piston.
